Europäisches Patentamt

European Patent Office

Office européen des brevets

(11) Publication number: **0 420 703 A2**

## (12) EUROPEAN PATENT APPLICATION

(21) Application number: **90310712.6**

(22) Date of filing: **28.09.90**

(51) Int. Cl.5: **G09G 3/36**

(30) Priority: **29.09.89 JP 113478/89 U**

(43) Date of publication of application:
**03.04.91 Bulletin 91/14**

(84) Designated Contracting States:
**DE FR GB**

(71) Applicant: **KABUSHIKI KAISHA TOSHIBA**
**72, Horikawa-cho Saiwai-ku**
**Kawasaki-shi Kanagawa-ken Tokyo(JP)**

(72) Inventor: **Gunji, Shizuka, c/o Intellectual**
**Property Div.**
**Toshiba Co., 1-1-1 Shibaura, Minato-ku**
**Tokyo(JP)**

(74) Representative: **Shindler, Nigel**
**BATCHELLOR, KIRK & CO. 2 Pear Tree Court**
**Farringdon Road**
**London EC1R 0DS(GB)**

(54) **Computer display.**

(57) A computer (1) comprises a display unit (5) having a LCD (15) which displays data in a range of tones of grey. A set up menu (70), stored in a ROM 37, can be displayed on the LCD (15) in order to select different sets of level data for controlling the range and step size of the grey scale levels for storage in a memory (40b). A grey scale setting circuit (52) converts colour or monochrome data into grey scale data in accordance with the level data. A drive circuit (61) drives the display with screen date in accordance with the grey scale data.

FIGURE 3

EP 0 420 703 A2

## COMPUTER DISPLAY

This invention relates to a computer having a flat panel display unit, such as a laptop computer or portable word processor. More particularly, this invention relates to a computer which is able to change the grey scale level of the flat panel display unit.

A laptop computer such as that disclosed in US 4,864,523 comprises a base unit and a flat panel display unit pivotally connected to the base unit. The flat panel display unit has a liquid crystal display device (LCD) or a plasma display panel (PDP). The laptop computer changes colour data into grey scale data. The LCD or the PDP displays grey scale data at sixteen different grey scale levels which are fixed.

The LCD executes a display of the grey scale data by blanking out some proportion of the dot data in constructing the screen image. When the LCD displays the grey scale data using the sixteen grey scale levels, an operator cannot see the partly flanked screen data clearly because the screen data flickers. The flicker of the screen data occurs because the blanking ratio is too close to the neighbouring levels of the grey scale.

When such flicker occurs, the operator could see the screen data clearly if the sixteen grey scale levels were changed to a eight grey scale levels because the ratio for blanking out the dot data is separated from the neighbouring levels of the eight grey scale levels. If the grey scale level is changed from sixteen levels to eight levels, the quality of screen data is improved. The operator, however, cannot change the grey scale level setting because it is fixed at sixteen levels.

The present invention seek to provide a portable computer which is able to change its grey scale level.

Accordingly the present invention provides a computer including a base unit and a display unit having a display which is capable of displaying a range of tones of grey and a driving circuit for driving the display, characterised by
means for selecting a grey scale range;
means for storing sets of level data, for producing the grey scale level, indicated by the indicating means; and
means for converting a colour and/or monochrome image data into a range of grey scale data in accordance with the level data and supplying the grey scale data to the driving circuit.

Accordingly the operator is able to change the grey scale level from a first level to a second level if the screen data flickers when the grey scale level is at the first level. Consequently, the operator is able to select the most suitable level.

Some embodiments of the invention will now be described by way of example with reference to the accompanying drawings in which:
Figure 1 is a perspective view of a laptop computer with a display unit coupled to a main body unit;
Figure 2 is a perspective view of the computer of Figure 1 with the display unit separated from the main body unit;
Figure 3 is a system block diagram of the main body unit;
Figure 4 is a block diagram of a first type of display unit;
Figure 5 is a block diagram of a second type of display unit;
Figure 6 is a flow chart for explaining the operation for setting a grey scale level;
Figure 7 is a table illustrating the relationship between the grey scale level and frame cycle ratios;
Figure 8 illustrates a set up menu for setting default values; and
Figure 9 illustrates the set up menu when the grey scale range is changed to eight levels.

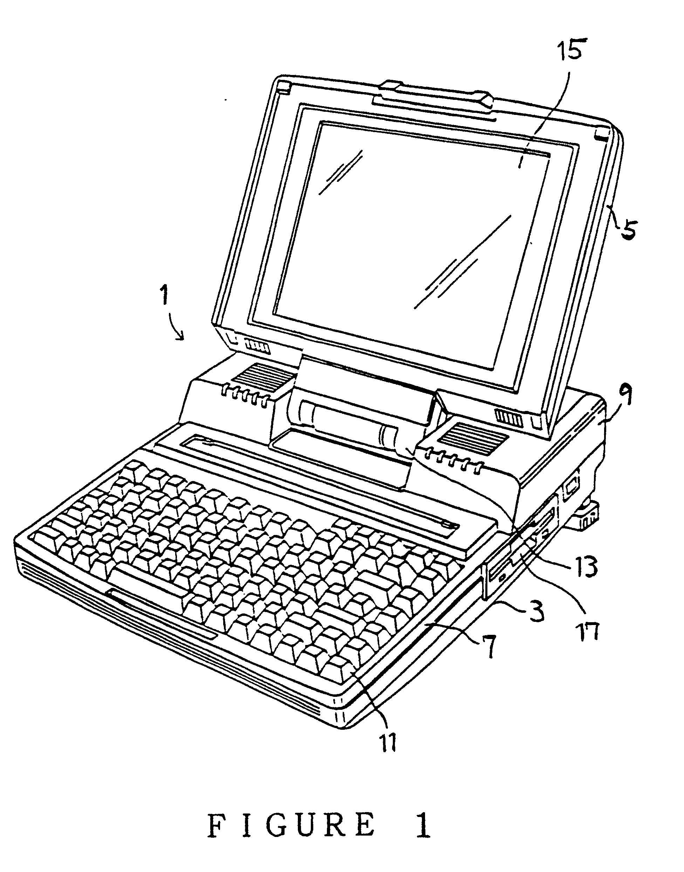

Figure 1 illustrates a laptop computer, with a display unit connected to a main body, according to one embodiment of the present invention.

The portable computer 1 has a main body unit 3 and a display unit 5. Main body unit 3 has a keyboard 11 in a front portion 7. A socket 13 is pivotally connected to main body unit 3. The display unit 5 has a LCD 15 and is removably mounted in socket 13, so as to be rotatable relative to the main body unit 3. The main body unit 3 has a floppy disk drive (FDD) 17.

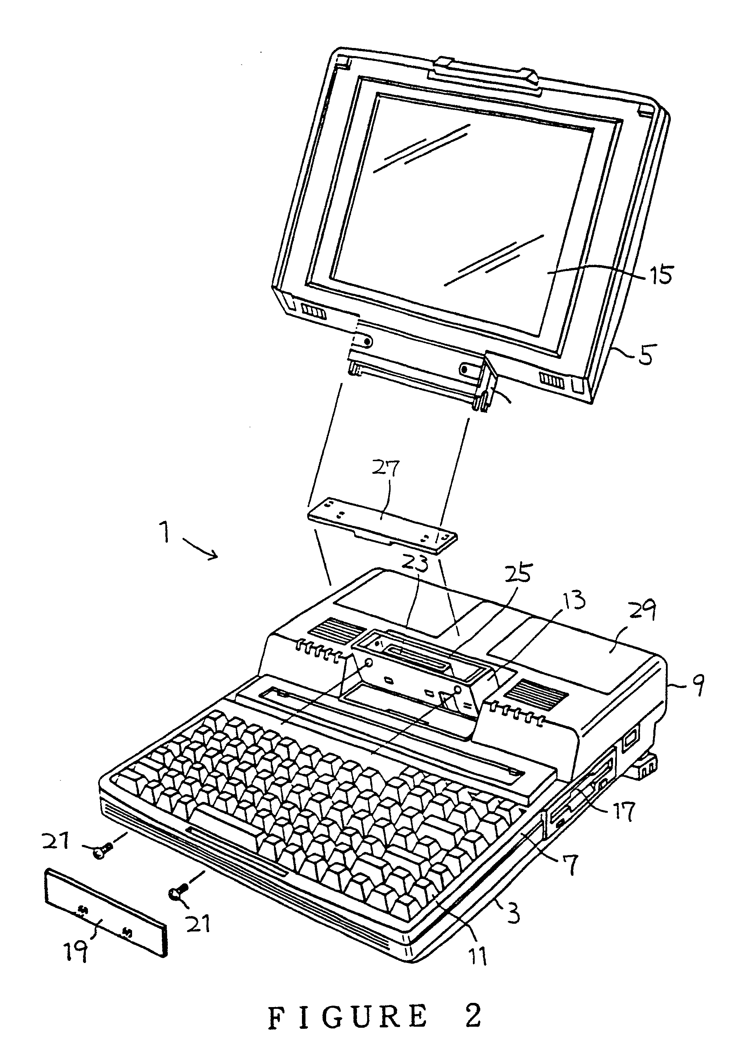

Figure 2 illustrates the laptop computer when first display unit is removed from the main body unit.

The LCD display unit 5 is removed from socket 13 by removing a screw cover 19 from socket 13 and then removing screws 21. Socket 13 has a first connector 23 for electrically connecting main body unit 3 and display unit 5. When display unit 5 is removed from socket 13, a socket cover 27 is used to cover the opening 25 of socket 13. Main body unit 3 has a pair of battery packs 29 in a rear portion 9. The battery packs 29 are removably connected to main body unit 3.

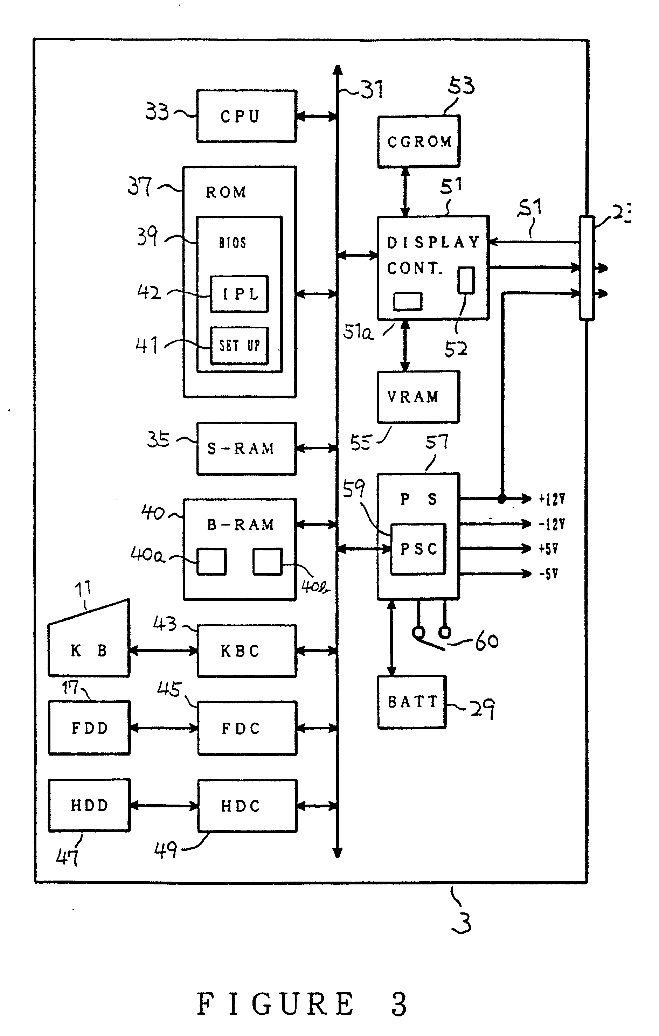

Figure 3 illustrates a system block diagram of the main body unit.

Main body 3 has a system bus 31. A central processing unit (CPU) 33, a system random access memory (S-RAM) 35, a read only memory (ROM) 37 and a back up random access memory (B-RAM) 40 are connected to system bus 31. B-RAM 40 is always supplied with a voltage even when power switch 60 is switched off so as to maintain the data stored therein. ROM 37 stores a basic input output system (BIOS) 39. BIOS 39 has a set up program 41 and an initial load program load (IPL) 42. S-RAM 35 is a main memory for storing an operating system. B-RAM 40 has a first area 40a for storing identification data including a type of display unit and a second area 40b for storing a grey scale level data. Keyboard 11 is connected to a keyboard controller 43 connected to system bus 31. FDD 17 is connected to a floppy disk controller (FDC) 45 connected to system bus 31. Main body unit 3 has a hard disk device (HDD) 47. HDD 47 is connected to a hard disk controller (HDC) 49 connected to system bus 31. Main body unit 3 has a display controller 51 connected to system bus 31 and first connector 23. Display controller 51 has a grey scale setting circuit 52 and a register 51a for storing the identification data. A character generate ROM (CGROM) for generating character data displayed on the first display unit 5 and a video RAM (V-RAM) 55 is connected to display controller 51. Display controller 51 is supplied with a display identification signal S1 for indicating the type of display unit from first connector 23. Batteries 29 are connected to a power supply 57 having a power supply controller (PSC) 59 and a power switch 60. PSC 59 is connected to system bus 31. Power supply 57 supplies voltages of +5 volt, -5 volt, +12 volt and -12 volt to each device in the main body unit 3. A voltage of +12 volt is supplied to first connector 23. When power switch 60 is turned off, power supply 57 supplies a voltage of +5 volt to B-RAM 40.

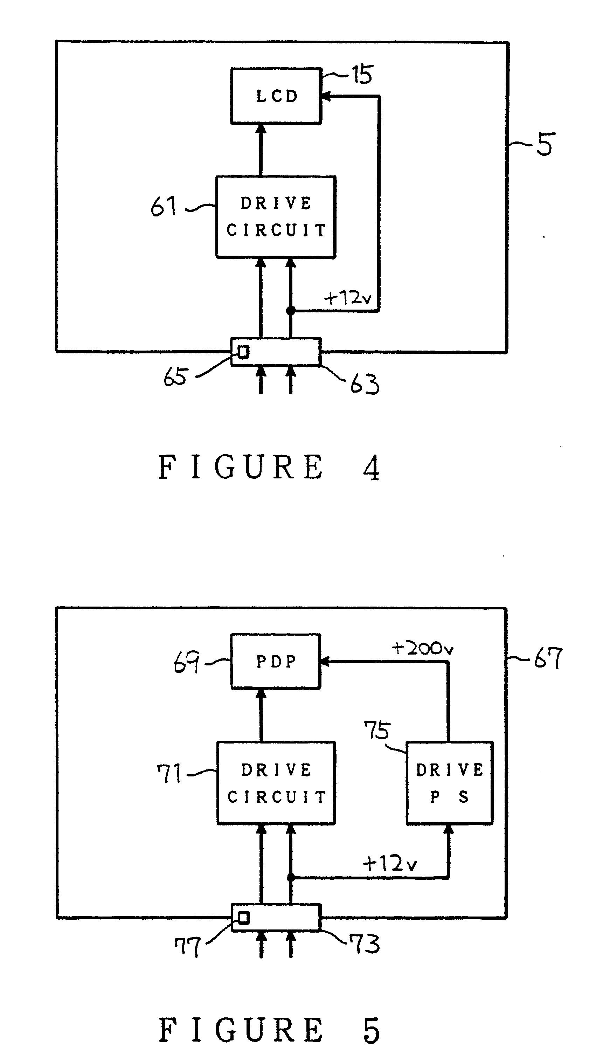

Figure 4 illustrates a block diagram of a first type of display unit.

Display unit 5 has an LCD 15, a first drive circuit 61 and a second connector 63. When second connector 63 is connected to first connector 23 of main body unit 3, first display unit 5 is electrically connected to main body unit 3. LCD 15 and first drive circuit 61 is supplied with a +12 volt supply from power supply 57 through first and second connectors 23, 63. First drive circuit 61 is supplied with data from display controller 51 through first and second connectors 23, 63 and controls LCD 15 according to the data. Second connector 63 has a first display identification terminal 65, and when display unit 5 is connected to main body unit 3, display identification signal S1 is set too high level via terminal 65. When display identification signal S1 is high, display controller 51 stores a first set of identification data indicating that first display unit 5 is connected to main body unit 3 in register 51a.

Figure 5 illustrates a block diagram of a second type of display unit which can be connected to the main body unit instead of the LCD display unit.

The second display unit 67 has a PDP 69, a second drive circuit 71, third connector 73 and a drive power supply 75. When third connector 73 is connected to first connector 23, second display unit 67 is electrically connected to main body 3. Second drive circuit 71 and drive power supply 75 are supplied with a +12 volt supply from power supply 57 through first and third connectors 23, 73. Drive power supply 75 converts the voltage of +12 volt into a voltage of +200 volt. Drive power supply 75 supplies the voltage of +200 volt to PDP 69. Second drive circuit 71 is supplied data from display controller 51 through first and third connectors 23, 73. Second drive circuit 71 controls PDP 69 according to the supplied data. Third connector 73 has a second display identification terminal 77. When the second display unit is connected to the main body unit 3, display identification signal S1 is at a low level by second display identified terminal. When display identification signal is low, display controller 51 stores second identification data indicating that second display unit 67 is connected to main body unit 3 in register 51a.

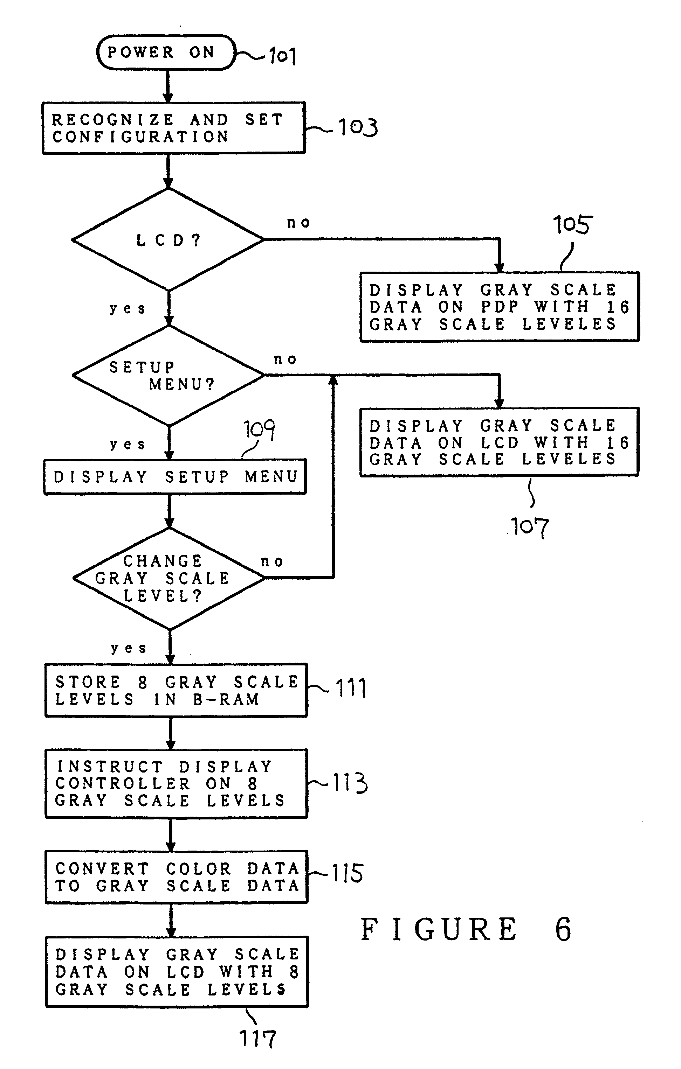

Figure 6 is a flow chart for explaining a method for setting a grey scale level.

When power switch 60 is turned on, power supply 57 supplies voltages of +5 volt, -5 volt, +12 volt and -12 volt to each device in the main body unit 3 (step 101).

When first display unit 5 is connected to main body unit 3, display identified signal S1 is high level. If display identification signal S1 is high level, display controller 51 stores the first identification data, indicating that LCD display unit 5 is connected to main body 3, in register 51a. When second display unit 67 is connected to main body unit 3, display identification signal S1 is low, and thus display controller 51 stores the second identification data, indicating that PDP display unit 67 is connected to main body unit 3, in register 51a. CPU 33 reads out IPL 42, recognises and sets a configuration of the laptop computer 1 according to IPL 42. CPU 33 refers to register 51a and stores the identification data in first area 40a of B-RAM 40. CPU 33 stores a first level data, indicating a normal sixteen grey scale level, in second area 40b of B-RAM 40 according to default values stores in BIOS 39 (step 103).

When PDP display unit 67 is connected to main body unit 3, CPU 33 sets data for indicating a display of the sixteen grey scale levels by PDP 69 in display controller 51. Grey scale setting circuit 52 converts colour and/or monochrome data supplied from system bus 31 into a grey scale data of the sixteen grey scale levels. Display controller 51 supplies the grey scale data to first drive circuit 71 through first connector 23 and third connector 73.

Second drive circuit 71 and drive power supply are supplied the voltage of the +12 volt from power supply 57 through first connector 23 and third connector 73. Drive power supply 75 converts the voltage of +12 volt into the voltage of +200. Drive power supply 75 supplies the voltage of +200 volt to PDP 69. Drive circuit 71 displays the grey scale data of the sixteen grey scale levels with pulse width modulation method (step 105).

When first display unit 5 is connected to main body unit 3, CPU 33 sets data for indicating a display of the sixteen grey scale levels by LCD 69 in display controller 51. Grey scale setting circuit 52 converts colour and/or monochrome data supplied from system bus 31 into a grey scale data of the sixteen grey scale levels. Display controller 51 supplies the grey scale data to first drive circuit 61 through first connector 23 and second connector 63. First drive circuit 61 and LCD 15 are supplied the voltage of the +12 volt from power supply 57 through a first connector 23 and second connector 73. Drive circuit 61 displays the grey scale data of the sixteen grey scale levels with some proportion of dot data for constructing the screen image blanked out (step 107).

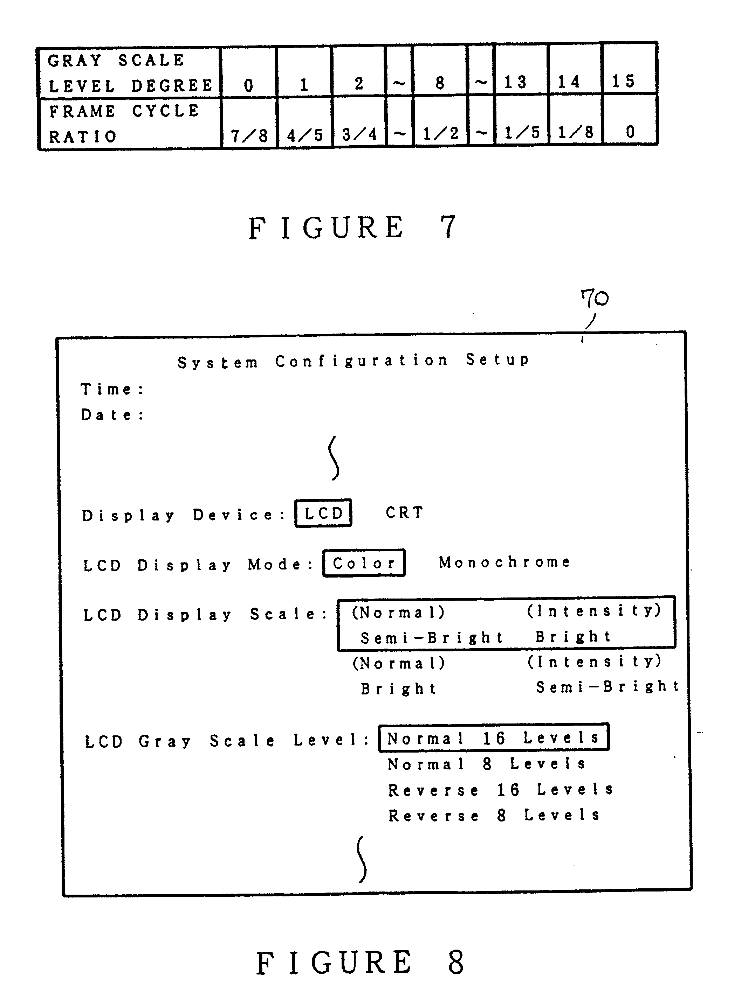

Figure 7 illustrates a relationship between each grey scale level and a ratio of frame cycle for explaining a method thinning out data.

For example, when a character is displayed with a zero degree grey scale level, the character is displayed seven times on a screen during the period of eight frame cycles. If a character is displayed with a thirteen degree grey scale level, the character is displayed once on the screen during the period of five frame cycles. When the sixteen grey scale levels is set, grey scale data is assigned to from the zero grey scale level up to a fifteen grey scale level.

After step 107 of Figure 6 is executed, if the operator is not able to see screen data of the sixteen grey scale levels clearly, be enters a command for displaying a set up menu of LCD 5 by keyboard 11 to change the grey scale level from sixteen levels to eight levels. When the command is entered, CPU 33 executes the set up program 41 of ROM 37. CPU 33 displays set up menu 70 disclosed in Figure 8 on LCD 15 (step 109).

In set menu 70 disclosed in Figure 8, default values are set. Each item surrounded by a rectangle is the respective default value. A first section of the menu (Display Device) selects the type of display unit, with LCD as a default value, and an alternative selection of PDP. A second section of the menu (LCD Display Mode) selects the conversion mode for converting into grey scale data. The default setting is colour with an alternative of monochrome. When the colour setting is selected, display controller 51 automatically converts colour data in a range of 262,144 values into grey scale data of sixteen grey scale levels. If the selection of colour is changed to select monochrome in the second section, display controller 51 automatically converts monochrome data in a range of 64 grey scales into grey scale data of sixteen grey levels. A third section (LCD Display Scale) selects brightness of the image. A selection of "semi-bright" in regard to normal a selection of "bright" in regard to high intensity characters are set as default vanes. When "semi-bright" is selected in regard to the normal characters, the normal characters are displayed at the eleventh grey scale level. When "bright" is selected in regard to the high intensity characters, they are displayed at the fourteenth grey scale level. Alternative selections of "bright" for normal characters and "semi-bright" for the high intensity characters are provided. A fourth section (LCD grey scale level) selects a grey scale level. A selection of normal 16 levels is set as the default value. Three alternatives (normal 8 levels, reverse 16 levels, reverse 8 levels) are provided and when the setting of normal 16 levels is selected, grey scale setting circuit 52 assigns colour or monochrome data selected in the second section to the sixteen grey scale levels in accordance with the brightness of colour. When the setting of normal 8 levels is selected, grey scale setting circuit 52 assigns colour or monochrome data to eight levels. When a selection of reverse 16 levels is made, circuit 52 assigns colour or monochrome data to the sixteen levels in inverse relationship to the brightness of the colour. When the selection of refers 8 levels is made circuit 52 assigns colour or monochrome data to eight levels in a similar inverse relationship.

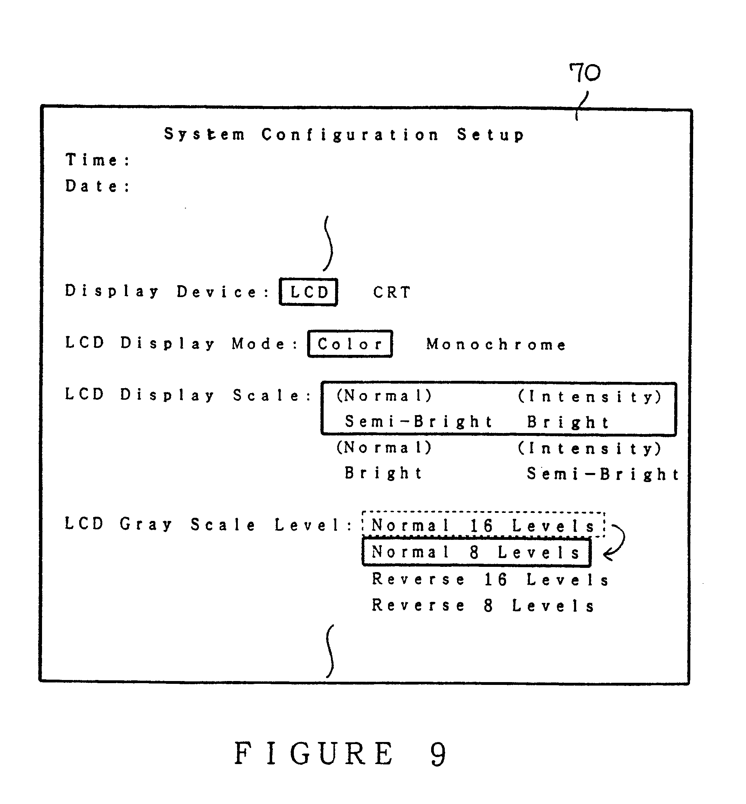

After step 109, if the operator changes the selection of normal 16 levels to the normal 8 levels as disclosed in Figure 9, as second set of level data, indicating the eight grey scale levels, is stored in the second area 40b of B-RAM 40 instead of the first set of level data. Then at step 111 CPU 33 sets data for indicating a display of the normal eight grey scale levels with the LCD 15 in display controller 51, and at stop 113 grey scale setting circuit 52 converts colour or monochrome data into grey scale data of eight grey scale levels. Grey scale setting circuit 52 assigns data to the grey scale level degrees of the zero, the second, the fourth, the sixth, the eighth, the tenth, the twelfth and the fourteenth degree in Figure 7, respectively. At step 115, drive circuit 61 displays screen data on LCD 15 with the ratios of the frame cycles according to eight degrees (step 117).

In the above described embodiment, even if the operator turns off switch 60, the grey scale level does not disappear because the level data for controlling the grey scale level is stored in B-RAM 40.

In the above described embodiment, the operator is able to change the grey scale level between two settings having a two-to-one relationship. However, the present invention is not limited to the above embodiment. The grey scale level may change to an arbitrary number of levels.

## Claims

1. A computer including a base unit (3) and a display unit (5) having a display (15) which is capable of displaying a range of tones of grey and a driving circuit (61) for driving the display (15), characterised by
means (70) for selecting a grey scale range;
means (40b) for storing sets of level data, for producing the grey scale level, indicated by the indicating means (70); and
means (52) for converting a colour and/or monochrome image data into a range of grey scale data in accordance with the level data and supplying the grey scale data to the driving circuit (61).

2. A computer comprising a base unit (3) and a display unit (5) having a display (15) capable of displaying a grey scale, and a driving circuit (61) for driving the display (15), characterised by:
first memory means (37) for storing a set up program (41) for displaying a set up menu (70) for changing a grey scale range on the display (15);
second memory means (40b) for storing a level data for indicating the grey scale range selected by the set up menu (70); and
a conversion circuit (52) for converting colour and/or monochrome data into grey scale data in accordance with the level data and supplying the grey scale data to the driving circuit (61).

3. A computer according to claim 1 or claim 2 in which the display unit includes a liquid crystal display or a gas plasma display.

4. A method for setting a grey scale level or grey scale display unit including a drive circuit (61) characterised by the steps of:
displaying a menu (70) for setting the grey scale range on the display (15);
storing a level data for indicating the grey scale range;
converting colour and/or a monochrome data into grey scale data in accordance with the level data; and
supplying the grey scale data to the drive circuit (61).

5

F I G U R E    1

FIGURE 2

# FIGURE 3

FIGURE 4

FIGURE 5

POWER ON — 101

RECOGNIZE AND SET CONFIGURATION — 103

LCD? — no →

DISPLAY GRAY SCALE DATA ON PDP WITH 16 GRAY SCALE LEVELES — 105

yes

SETUP MENU? — no →

DISPLAY GRAY SCALE DATA ON LCD WITH 16 GRAY SCALE LEVELES — 107

yes

DISPLAY SETUP MENU — 109

CHANGE GRAY SCALE LEVEL? — no →

yes

STORE 8 GRAY SCALE LEVELS IN B-RAM — 111

INSTRUCT DISPLAY CONTROLLER ON 8 GRAY SCALE LEVELS — 113

CONVERT COLOR DATA TO GRAY SCALE DATA — 115

DISPLAY GRAY SCALE DATA ON LCD WITH 8 GRAY SCALE LEVELS — 117

FIGURE 6

| GRAY SCALE LEVEL DEGREE | 0 | 1 | 2 | ~ | 8 | ~ | 13 | 14 | 15 |
|---|---|---|---|---|---|---|---|---|---|
| FRAME CYCLE RATIO | | 7/8 | 4/5 | 3/4 | ~ | 1/2 | ~ | 1/5 | 1/8 | 0 |

# FIGURE 7

70

```
        System Configuration Setup
Time:
Date:



Display Device: [LCD]   CRT

LCD Display Mode: [Color]   Monochrome

LCD Display Scale: [(Normal)         (Intensity)
                    Semi-Bright    Bright  ]
                   (Normal)         (Intensity)
                    Bright          Semi-Bright


LCD Gray Scale Level: [Normal 16 Levels]
                       Normal  8 Levels
                       Reverse 16 Levels
                       Reverse  8 Levels
```

# FIGURE 8

EP 0 420 703 A2

70

```
            System Configuration Setup
Time:
Date:




Display Device: | LCD |   CRT

LCD Display Mode: | Color |   Monochrome

LCD Display Scale: | (Normal)        (Intensity)
                     Semi-Bright   Bright     |
                     (Normal)        (Intensity)
                     Bright          Semi-Bright

LCD Gray Scale Level: [Normal 16 Levels]
                      | Normal  8 Levels |
                        Reverse 16 Levels
                        Reverse  8 Levels
```

FIGURE   9

12